(19) Europäisches Patentamt

European Patent Office

Office européen des brevets

(11) **EP 0 637 519 B1**

(12) **FASCICULE DE BREVET EUROPEEN**

(45) Date de publication et mention
de la délivrance du brevet:
**15.10.1997 Bulletin 1997/42**

(51) Int. Cl.$^6$: **B60C 15/024**

(21) Numéro de dépôt: **94111606.3**

(22) Date de dépôt: **26.07.1994**

(54) **Pneumatique comportant un bourrelet de forme perfectionnée**

Reifen mit einem Wulst mit spezifischer Form

Tyre having a bead with a specific shape

(84) Etats contractants désignés:
**DE ES FR GB IT LU**

(30) Priorité: **06.08.1993 FR 9309798**

(43) Date de publication de la demande:
**08.02.1995 Bulletin 1995/06**

(73) Titulaire: **SEDEPRO**
**F-75015 Paris (FR)**

(72) Inventeur: **Herbelleau, Yves**
**F-63200 Riom (FR)**

(74) Mandataire: **Bauvir, Jacques**
**SEDEPRO**
**c/o SRK-Service Brevets**
**23, Place des Carmes**
**63040 Clermont-Ferrand Cedex (FR)**

(56) Documents cités:
**EP-A- 0 129 179      DE-A-  860 151**
**DE-A- 1 480 849      DE-A- 2 309 882**
**FR-A- 1 089 315      FR-A- 1 195 309**
**GB-A- 2 061 199**

Il est rappelé que:  Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Rank Xerox (UK) Business Services
2.14.16/3.4

**Description**

La présente invention se rapporte aux pneumatiques, et plus précisément aux bourrelets de ceux-ci.

On connaît le rôle des bourrelets des pneumatiques : il s'agit d'assurer "l'accrochage" du pneumatique sur la jante sur laquelle il est monté. A cette fin, la forme du bourrelet du pneumatique est adaptée à la forme de la jante pour laquelle il est conçu, c'est-à-dire que la face latérale extérieure du bourrelet, ainsi que son siège (c'est-à-dire sa face radialement intérieure) ont une forme qui correspond sensiblement à la forme de la jante correspondante, si on néglige les légères différences dont le but est d'assurer un bon serrage du bourrelet sur la jante.

Quant à la forme de la face latérale intérieure, elle correspond plus ou moins à la forme de la face latérale extérieure jusqu'à rencontrer le siège du bourrelet dans une zone que l'on appellera, dans la présente description, le bord intérieur du bourrelet, où l'on rencontre en général une arrête assez prononcée appelée "pointe de bourrelet". Le caoutchouc qui y apparaît est appelé "pointe de gomme".

Les pneumatiques pour véhicules de tourisme sont montés sur en règle générale sur des jantes en une seule pièce, comportant des rebords sensiblement perpendiculaires à l'axe de la jante, prolongés par les sièges recevant le bourrelet, présentant une portée tronconique légèrement inclinée par rapport à l'axe de la jante (d'un angle valant environ 5°), les sièges étant bordés par une protubérance appelée "hump", et comportant une gorge centrale radialement plus basse que les sièges. La pointe du bourrelet coopère avec cette protubérance disposée sur la jante, pour conférer au pneumatique l'aptitude à rester monté sur la jante même lorsque sa pression de gonflage est très insuffisante.

Le rôle du bord intérieur du bourrelet est donc important pour la bonne tenue du pneumatique monté sur sa jante.

Lorsqu'il faut monter ou démonter le pneumatique de sa jante, on utilise des outils qui entrent en prise avec celui-ci sensiblement au niveau du bord intérieur du bourrelet. Ces outils appliquent très localement sur le bourrelet du pneumatique des déformations qui peuvent être très importantes, au point d'endommager le bourrelet.

Cela conduit à devoir renforcer la pointe du bourrelet du pneumatique pour qu'elle puisse résister sans dommage aux sollicitations que le bourrelet doit subir au cours de son utilisation. On utilise pour cela des languettes textiles, ce qui augmente le prix de revient du pneu.

On sait aussi que le montage et le démontage du pneumatique provoquent un basculement du bourrelet par rotation autour de son centre, c'est-à-dire approximativement autour de la tringle qu'il comporte. Les sollicitations en découlant sont d'autant plus importantes que la raideur en rotation du bourrelet est élevée. La raideur sera d'autant plus grande que l'on utilise des tringles de forme très éloignée d'une section circulaire, ou lorsque l'ancrage de la carcasse du pneumatique comporte de nombreux renforcements visant à en augmenter la robustesse.

L'invention vise en particulier les pneumatiques qui, comportant de part et d'autre un bourrelet, chaque bourrelet étant délimité par un siège sensiblement tronconique, faiblement incliné par rapport à l'axe du pneumatique lorsque le bourrelet est en position de montage, un bord intérieur, une face latérale intérieure et une face latérale extérieure, le bourrelet étant destiné à être appliqué radialement par dessus le siège d'une jante, la paroi latérale intérieure étant orientée vers la cavité interne du pneumatique, le bord intérieur formant transition entre ledit siège et ladite paroi latérale intérieure, présentent une rigidité du bourrelet en rotation supérieure à 5 mN/radian. On vise par là la très grande majorité des pneumatiques usuels, et l'on veut exclure les pneumatiques spécialement développés pour que le bourrelet soit facile à basculer, comme par exemple les pneumatiques repliables (voir par exemple le brevet US 4 057 091), ou les pneumatiques conçus pour être montés sur des jantes spéciales, dépourvues de gorge centrale de montage (voir par exemple la demande de brevet EP 0 129 179).

Le but de la présente invention est de proposer une nouvelle conception du bourrelet de ces pneumatiques, qui le rende apte à subir sans dommage les opérations de montage et de démontage, sans préjudice de son aptitude à coopérer avec les humps prévus sur la jante pour conférer au pneumatique d'excellentes propriétés dites d'anti-décoincement, et sans nécessité d'utiliser des renforcements textiles tels que ceux apparaissant dans les pointes de bourrelet.

Le bord intérieur du pneumatique selon l'invention est arrondi ; il ne comporte donc pas l'arête effilée, formant un angle inférieur à 90°, qui sépare usuellement la face latérale intérieure du bourrelet de son siège, arête d'où découle le nom usuel de pointe de gomme. L'angle en question est celui que l'on peut mesurer sur une coupe radiale du bourrelet, entre la tangente au siège et la tangente à la face latérale intérieure, en passant d'une tangente à l'autre en balayant le bourrelet.

Sous un autre aspect, le pneumatique selon l'invention est caractérisé en ce que le bord intérieur présente une surface de transition dont l'inclinaison, mesurée par la tangente le long du contour vu en coupe radiale, passe par une valeur intermédiaire entre l'inclinaison du siège et celle de la paroi latérale intérieure.

A titre d'exemple d'une telle surface de transition, le bord intérieur présente au moins une portée conique, dont l'inclinaison est intermédiaire entre l'inclinaison du siège et l'inclinaison de la paroi latérale intérieure. Cette disposition constitue une alternative au bord intérieur de forme arrondie.

Afin de faciliter le moulage d'un tel bourrelet, l'invention propose également d'utiliser un moyen de moulage qui permette de maîtriser très précisément la forme du bourrelet à son bord intérieur. Au lieu d'utiliser une membrane très souple, s'apparentant à une chambre à air, on utilise de préférence un moule rigide pour assurer le moulage de la face latérale intérieure au moins dans sa partie proche du bord intérieur.

Il est bien reconnu que la capacité d'un pneumatique de s'opposer au déjantage dépend très largement du bord intérieur du bourrelet. Les pneumatiques pour véhicules de tourisme conçus actuellement font l'objet de tests pour vérifier que, même en virage pris brutalement avec une pression réduite, les bourrelets restent en place sur leur siège.

On sait que, plus le serrage du bourrelet est important, plus faible sera la tendance du pneumatique à déjanter. De même, plus la rigidité en rotation du bourrelet est grande, plus faible sera la tendance du pneumatique à déjanter. Pour rappel, le serrage dépend de la quantité de gomme à comprimer entre la tringle et la surface radialement extérieure du siège de la jante correspondante. Un certain niveau de serrage est nécessaire pour pouvoir transmettre un couple freineur ou moteur entre la jante et le pneumatique. Mais plus le serrage est important, plus grandes seront les difficultés pour monter et/ou démonter le pneu, principalement le démontage avec des outils portatifs. Le concepteur du pneumatique cherche donc à atteindre un bon compromis entre la sécurité (faible sensibilité au déjantage) obtenue en agissant sur le serrage et sur la rigidité en rotation du bourrelet, et la facilité de montage/démontage.

Le pneumatique selon l'invention, à bord intérieur arrondi, dépourvu de pointe de gomme, conserve d'aussi bonnes performances qu'un pneumatique à pointe de gomme quant à sa faible propension à déjanter lorsqu'il est monté sur sa jante, car il autorise une augmentation soit du serrage soit de la rigidité en rotation du bourrelet, tout en gardant la même facilité de le monter et/ou démonter de sa jante.

La description suivante, à consulter avec les figures jointes, permet de bien comprendre l'invention :

La figure 1 est une vue en coupe radiale d'un bourrelet de pneumatique selon l'invention.
La figure 2 montre, en coupe radiale, un moule adapté à la réalisation du pneumatique illustré par la figure 1.
La figure 3 montre une variante d'un moule selon l'invention.
La figure 4 illustre comment on a caractérisé la raideur en rotation du bourrelet.

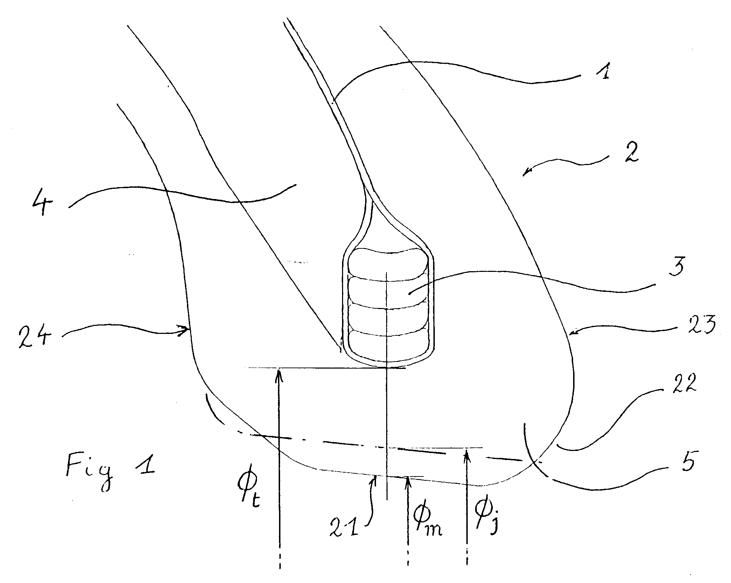

A la figure 1, on reconnaît un bourrelet de pneumatique. On voit qu'il comporte une tringle 3 constituée ici par l'enroulement d'un profil de section incurvée. Il comporte également une carcasse 1 du type monofil, accrochée à la tringle par le fait que le fil unique constituant la carcasse forme des allers et retours vers chaque tringle autour de laquelle il se trouve très intimement plaqué. La carcasse et son ancrage à une tringle sont construits comme expliqué dans le brevet US 4 801 344. Cette disposition n'est bien sûr pas limitative, d'autres agencements pouvant être adoptés à l'intérieur du bourrelet. On n'indiquera pas en détail tous les constituants que comporte le bourrelet, car de façon générale, le choix et la localisation de ceux-ci ne sont pas directement concernés par la présente invention, qui propose essentiellement une forme nouvelle pour le bord intérieur du bourrelet.

On se contentera de préciser que le bourrelet comporte un bourrage tringle 4, par exemple plaqué sur le côté de la carcasse 1. Le bourrelet est délimité par une face latérale extérieure 24, par son siège 21 destiné à reposer sur la jante (siège qui présente une portée sensiblement tronconique), puis par une face latérale intérieure 23. Entre le siège 21 et la face latérale intérieure 23, on trouve une zone 5 délimitée par le bord intérieur 22 du bourrelet. On voit que ce bord intérieur 22 assure un raccordement très progressif entre le siège 21 et la face latérale intérieure 23. En section radiale, le bord intérieur présente une forme arrondie. De préférence, le rayon de courbure est plus grand ou égal à 5 mm.

Quant aux matériaux utilisés, on peut noter que la zone 5 ne comporte pas de caoutchouc renforcé ni de renforcement sous forme de languette textile ou autre. Elle est constituée par matériau analogue à celui que l'on peut trouver usuellement sous la tringle.

Un pneumatique $T_1$, dont le bourrelet a été réalisé selon ce qui vient d'être indiqué, de dimensions 175/70 HR 13, a été comparé à un pneumatique $T_2$ de mêmes dimensions, renforcé par la même tringle et la même carcasse, et pourvu d'une pointe de gomme, et a été aussi comparé à un pneumatique Michelin de type MXL de mêmes dimensions, également pourvu d'une pointe de gomme. Ces pneumatiques ont subi un test 1 permettant de relever la pression de gonflage sous laquelle le bourrelet à tendance à quitter son siège lorsqu'un véhicule lancé à 52 km/h aborde un virage de rayon valant 20 m. Le taux de serrage est défini par la formule suivante :

$$S = (\phi_j - \phi_m)/(\phi_t - \phi_j)$$

où $\phi_t$ est le diamètre mesuré sous la tringle, $\phi_m$ est le diamètre mesuré sous le pneu tel que moulé, relevé dans le même plan perpendiculaire à l'axe de rotation que le plan contenant le diamètre $\phi_t$, $\phi_j$ est le diamètre mesuré sur le siège de jante, dans le même plan perpendiculaire.

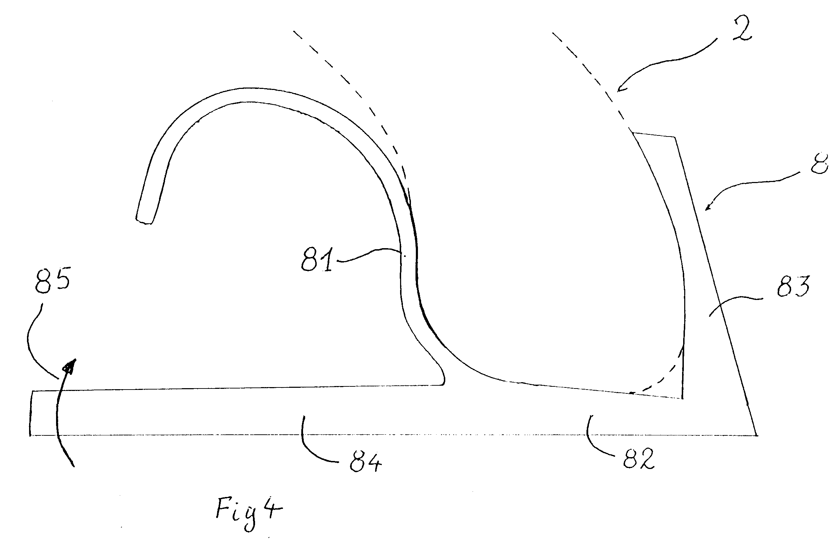

On a relevé la raideur en rotation des bourrelets selon la méthode expliquée ci-dessous, au moyen d'un outil illustrée par la figure 4. On a inséré le bourrelet 2 dans un morceau de jante 8 comportant un rebord 81, un siège 82, et une plaque supplémentaire 83 remontant le long de la face latérale intérieure 23 jusqu'à la même hauteur que le rebord 81. Circonférentiellement, ce morceau de jante 8 se développe sur une faible longueur, valant 40 mm, pour relever une raideur comparable à celle s'opposant aux sollicitations du bourrelet par des leviers tels que ceux utilisés lors du montage ou du démontage des pneus. Le couple C de rotation est appliqué sur le bras de levier 84, comme schématisé par la flèche 85 à la figure 4.

On a relevé les valeurs suivantes :

|  | Test 1 | S | C |
|---|---|---|---|
| Pneu T1 | 0,9 bar | 0,7 | 14 mN/radian |
| Pneu T2 | 0,9 bar | 0,7 | 14 mN/radian |
| Pneu MXL | 0,9 bar | 0,7 | 10 mN/radian |

Outre ces performances, on a également jugé l'aptitude au montage et au démontage, qui est jugée faible s'il apparaît des blessures au bord intérieur du bourrelet. Le pneumatique $T_2$ est rapidement endommagé alors que les pneumatiques $T_1$ et MXL restent vierges de toute blessure. On voit que l'invention permet, dans tous les cas où la raideur de basculement du bourrelet est importante (voir valeurs de C pour les pneus $T_1$ et $T_2$ ci-dessus), d'éviter de façon très efficace toute blessure provoquée par les outils de montage ou de démontage, tout en procurant une aptitude suffisante du pneumatique à rester sur son siège. Le pneumatique selon l'invention jouit d'un niveau de performance excellent sur ce critère, comparable aux meilleurs témoins dont le bourrelet est forme classique, présentant une pointe de gomme renforcée par une languette de protection.

Dans l'état de la technique, afin d'assurer le moulage du bourrelet, on recourt le plus souvent à une pièce moulante rigide qui moule à la fois la face latérale extérieure 24 du bourrelet et le siège 21. En revanche, la face latérale intérieure 23 est généralement moulée au moyen d'une membrane souple qui se déploie à l'intérieur de la cavité formée par le pneumatique lorsque celui-ci se trouve placé dans une presse de vulcanisation. Il est également en soi connu d'utiliser un moule rigide pour assurer le moulage de la cavité intérieure du pneumatique.

Afin de maîtriser parfaitement la forme du bord intérieur du bourrelet, l'invention propose que la pièce 6 assurant le moulage de la cavité intérieure du pneumatique soit une pièce rigide (par opposition aux membranes souples utilisées habituellement) se prolongeant sous le bourrelet, pour rencontrer la pièce 7 assurant le moulage de la face latérale extérieure du bourrelet et du siège non pas à l'aplomb de la face latérale intérieure, mais en un endroit décalé axialement sous la zone 5. Ainsi, le procédé de moulage du bourrelet d'un pneumatique, la surface extérieure dudit bourrelet comportant notamment un siège et une paroi latérale orientée vers la cavité interne du pneumatique, ledit bourrelet étant destiné à reposer radialement par dessus le siège d'une jante, le siège et ladite paroi latérale étant moulés par au moins deux moyens de moulage différents, est caractérisée en ce que, pour mouler la paroi latérale, on utilise un moyen de moulage rentrant, assurant à la fois le moulage d'au moins une partie de la face latérale intérieure et le moulage d'une partie de la surface du bourrelet située radialement sous le bourrelet.

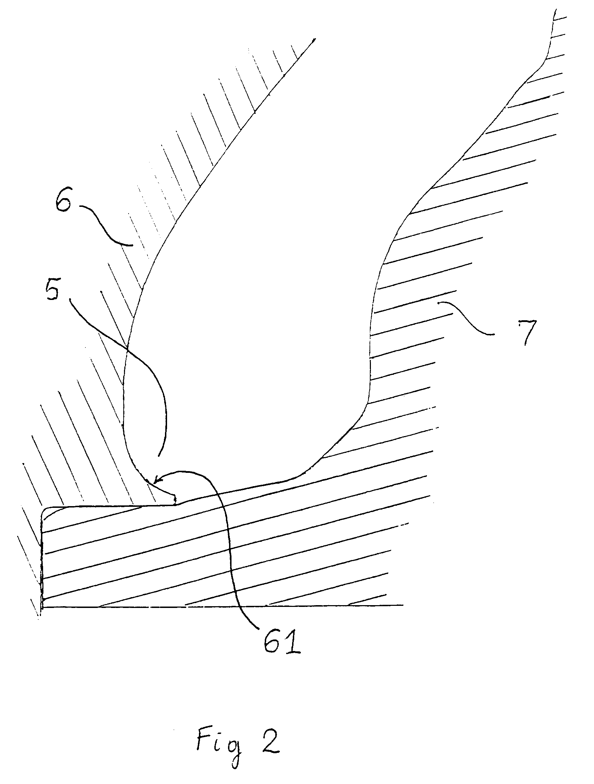

On peut par exemple utiliser un moyen de moulage rentrant dont la base, c'est-à-dire la partie radialement inférieure, est pourvue d'une surface 61 arrondie, comme montré à la figure 2. Le rayon de courbure de ladite surface de moulage est de préférence supérieur ou égal à 5 mm. On obtient un pneumatique dont le bord intérieur du bourrelet présente, vue en section méridienne, une forme arrondie.

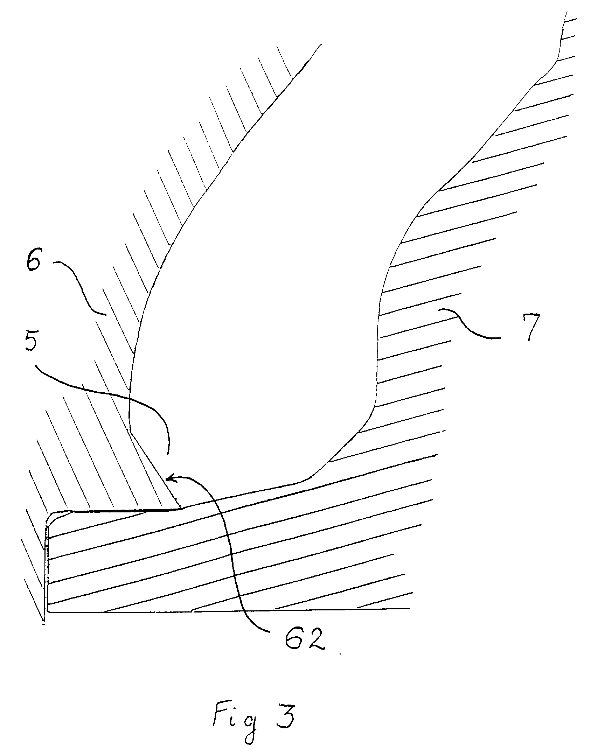

Ou bien ladite base est pourvue d'une surface de moulage tronconique 62, comme monté à la figure 3. Dans ce dernier cas, on obtient un pneumatique dont le bord intérieur présente au moins une portée conique dont l'inclinaison est intermédiaire entre l'inclinaison du siège et celle de la paroi latérale.

La pièce 6 illustrée aux figures 2 et 3 est soit la partie correspondante d'un noyau rigide assurant en outre le moulage de la cavité intérieure d'un pneumatique, ou bien c'est une anneau rigide utilisé pour mouler la partie basse de la face intérieure du bourrelet, là où l'on veut imposer la forme enseignée par l'invention, alors que la partie supérieure est moulée par une membrane souple déployable, comme peuvent en être pourvues les presses de vulcanisation.

**Revendications**

1. Pneumatique comportant de part et d'autre un bourrelet (2), chaque bourrelet (2) étant délimité par un siège (21) sensiblement tronconique, faiblement incliné vers l'extérieur de la cavité interne du pneu par rapport à l'axe du pneumatique, un bord intérieur (22), une face latérale intérieure (23) et une face latérale extérieure (24), le bourrelet (2) étant destiné à être monté radialement par dessus le siège d'une jante comportant un rebord orienté sensiblement perpendiculairement par rapport à l'axe de rotation et un siège sensiblement tronconique, faiblement incliné vers l'intérieur de ladite jante par rapport à l'axe du pneumatique, la paroi latérale intérieure (23) étant orientée vers la cavité interne du pneumatique et étant de forme correspondant sensiblement à la forme de la face latérale extérieure (24) dans une zone en regard dudit rebord de la jante sur laquelle le bourrelet est destiné à être monté, le bord intérieur (22) formant transition entre ledit siège (21) et ladite paroi latérale intérieure (23), la rigidité du bourrelet, en rotation étant supérieure à 5 mN/radian, caractérisé en ce que le bord intérieur (22) présente une surface de transition dont l'inclinaison, mesurée par la tangente le long du contour vu en coupe radiale, passe par une valeur intermédiaire entre l'inclinaison du siège (21) et celle de la paroi latérale intérieure (23) et en ce que ledit bord intérieur (22) est dépourvu de pointe de gomme à la transition entre le siège (21) et la face latérale intérieure (23) du bourrelet (2).

2. Pneumatique selon la revendication 1, caractérisé en ce que le bord intérieur (22) présente, en section radiale, une forme arrondie.

3. Pneumatique selon la revendication 2, caractérisé en ce que le rayon de courbure de ladite forme arrondie est plus grand ou égal à 5 mm.

4. Pneumatique selon la revendication 1, caractérisé en ce que le bord intérieur (22) présente au moins une portée conique dont l'inclinaison est intermédiaire entre l'inclinaison du siège (21) et celle de la paroi latérale (23).

5. Peumatique selon l'une des revendications 1 à 4, caractérisé en ce que la zone (5) juste adjacente au bord intérieur (22), et comprise entre ledit siège (21) et ladite paroi latérale intérieure (23), ne comporte pas de renforcement sous forme de languette textile ou similaire et est constituée par matériau analogue à celui présent au dessus du siège de jante.

6. Pneumatique selon l'une des revendications 1 à 5, caractérisé en ce que au moins la partie radialement inférieure de la face latérale intérieure (23) et une partie du siège (21) du bourrelet située radialement sous le bourrelet sont moulés par le même moyen de moulage rentrant, l'autre partie du siège du bourrelet étant moulée par d'autres moyens de moulage.

## Claims

1. A tyre comprising a bead (2) on both its sides, each bead (2) being defined by a substantially frustoconical seat (21) which is inclined slightly towards the outside of the inner cavity of the tyre with respect to the axis of the tyre, an inner edge (22), an inner side face (23) and an outer side face (24), the bead (2) being intended to be mounted radially on top of the seat of a rim comprising a flange oriented substantially perpendicular to the axis of rotation and a substantially frustoconical seat which is slightly inclined towards the inside of said rim with respect to the axis of the tyre, the inner side wall (23) being directed towards the inner cavity of the tyre and being of a shape corresponding substantially to the shape of the outer side face (24) in a zone opposite said flange of the rim on which the bead is intended to be mounted, the inner edge (22) forming a transition between said seat (21) and said inner side wall (23), the rigidity of the bead in rotation being greater than 5 mN/radian, characterised in that the inner edge (22) has a transition surface the inclination of which, measured by the tangent along the contour viewed in radial section, passes through an intermediate value between the inclination of the seat (21) and that of the inner side wall (23) and in that said inner edge (22) is without a rubber point at the transition between the seat (21) and the inner side face (23) of the bead (2).

2. A tyre according to Claim 1, characterised in that the inner edge (22) has a rounded shape in radial section.

3. A tyre according to Claim 2, characterised in that the radius of curvature of said rounded shape is greater than or equal to 5 mm.

4. A tyre according to Claim 1, characterised in that the inner edge (22) has at least one conical bearing surface, the inclination of which is intermediate between the inclination of the seat (21) and that of the side wall (23).

5. A tyre according to one of Claims 1 to 4, characterised in that the zone (5) just adjacent to the inner edge (22), and included between said seat (21) and said inner side wall (23), does not comprise a reinforcement in the form of a textile strip or the like and is formed by material similar to that present above the rim seat.

6. A tyre according to one of Claims 1 to 5, characterised in that at least the radially lower part of the inner side face (23) and part of the seat (21) of the bead located radially beneath the bead are moulded by the same reentrant moulding means, the other part of the bead seat being moulded by other moulding means.

## Patentansprüche

1. Reifen, der beiderseits einen Wulst (2), wobei jeder Wulst (2) durch einen im wesentlichen kegelstumpfförmigen Sitz (21) begrenzt ist, der zur Außenseite des inneren Hohlraums des Reifens in Bezug auf die Achse des Reifens leicht geneigt ist, einen Innenrand (22), eine innere Seitenfläche (23) und eine äußere Seitenfläche (24) aufweist, wobei der Wulst (2) dazu bestimmt ist, radial auf dem Sitz einer Felge montiert zu werden, die einen im wesentlichen senkrecht in Bezug auf die Drehachse ausgerichteten Rand und einen im wesentlichen kegelstumpfförmigen Sitz aufweist, der zur Außenseite der genannten Felge in Bezug auf die Reifenachse leicht geneigt ist, wobei die innere Seitenwand (23) gegen den inneren Hohlraum des Reifens geneigt ist und eine Form aufweist, die in wesentlichen der Form der äußeren Seitenwand (24) in einem Bereich entspricht, der dem genannten Rand der Felge gegenüberliegt, auf der der Wulst bestimmungsgemäß montiert werden soll, wobei der Innenrand (22) einen Übergang zwischen dem genanntne Sitz (21) und der genannten inneren Seitenwand (23) bildet und die Drehsteifigkeit des Wulstes größer ist als 5 mN/rad, dadurch gekennzeichnet, daß der Innenrand (22) eine Übergangsfläche aufweist, deren Neigung, gemessen durch die Tangente längs der im Radialschnitt zu sehenden Kontur, einen Zwischenwert zwischen der Neigung des Sitzes (21) und der der inneren Seitenwand (23) durchläuft, und daß der genannte Innenrand (22) am Übergang zwischen dem Sitz (21) und der inneren Seitenfläche (23) des Wulstes (2) keine Gummispitze aufweist.

2. Reifen nach Anspruch 1, dadurch gekennzeichnet, daß der Innenrand (22) im Radialschnitt eine abgerundete Form aufweist.

3. Reifen nach Anspruch 2, dadurch gekennzeichnet, daß der Krümmungsradius der genannten abgerundeten Form größer oder gleich 5 mm ist.

4. Reifen nach Anspruch 1, dadurch gekennzeichnet, daß der Innenrand (22) mindestens einen konischen Bereich aufweist, dessen Neigung zwischen der Neigung des Sitzes (21) und dem der Seitenwand (23) liegt.

5. Reifen nach einem der Ansprüche 1 bis 4, dadurch gekennzeichnet, daß der Bereich (5), der unmittelbar an den Innenrand (22) angrenzt und zwischen dem genannten Sitz (21) und der genannten inneren Seitenwand (23) liegt, keine Verstärkung in Form einer Textilzunge o. dgl. aufweist und von einem Material gebildet ist, das analog ist zu dem, das über dem Felgensitz vorliegt.

6. Reifen nach einem der Ansprüche 1 bis 5, dadurch gekennzeichnet, daß mindestens der Abschnitt radial unter der inneren Seitenfläche (23) und ein Abschnitt des Sitzes (21) des Wulstes, der radial unter dem Wulst gelegen ist, durch dieselbe, zurückspringende Abformungseinrichtung abgeformt sind, während der andere Teil des Wulstsitzes durch andere Abformungsmittel geformt ist.

1

2

3

23

22

5

4

24

21

$\phi_j$

$\phi_m$

$\phi_t$

Fig 1

Fig 2

6

5

7

62

Fig 3

EP 0 637 519 B1

Fig 4